# FASCICULE DE BREVET EUROPEEN

(11) **EP 4 444 564 B1**
(45) Date de publication et mention de la délivrance du brevet: **12.11.2025**
(21) Numéro de dépôt: 22834914.8
(22) Date de dépôt: 08.12.2022
(51) Int. Cl.: B60K 25/02, B60K 25/00, B60K 17/02

(54) **DISPOSITIF DE COUPLAGE COMBINANT UN CRABOT ET UN EMBRAYAGE**
KOPPLUNGSVORRICHTUNG, DIE EINE KLAUENKUPPLUNG UND EINE KUPPLUNG KOMBINIERT
COUPLING DEVICE COMBINING A DOG-TYPE CLUTCH AND A CLUTCH

(30) Priorité: 10.12.2021 FR 2113284
(43) Date de publication de la demande: 16.10.2024
(73) Titulaire: Horse Powertrain Solutions, S.L.U., 28108 Alcobendas Madrid (ES)
(72) Inventeur: BEISBARDT, Olivier, 78084 Guyancourt (FR); RAOUL, Michel, 78084 Guyancourt (FR)
(74) Mandataire: Elzaburu S.L.P.
(86) Numéro de dépôt international: PCT/EP2022/084904
(87) Numéro de publication internationale: WO 2023/104939

(56) Documents cités:
- WO-A1-2011/009693
- WO-A1-2014/042891
- DE-U1- 202011 104 776
- US-A1- 2009 255 741

## Description

### Domaine technique de l'invention

La présente invention concerne un groupe de propulsion comprenant un moteur à combustion interne.

La présente invention concerne un agencement d'accessoires du moteur à combustion interne.

La présente invention concerne plus particulièrement un dispositif de couplage/découplage d'éléments de fonctionnement du groupe de propulsion.

### Etat de la technique

Un véhicule automobile avec une motorisation thermique comporte un moteur thermique ou à combustion interne sur lequel sont fixés des accessoires nécessaires pour le bon fonctionnement dudit moteur.

Lesdits accessoires sont entrainés par le moteur thermique par l'intermédiaire de roues dentées ou pignons dont au-moins une roue dentée fixée solidaire d'une extrémité d'un vilebrequin du moteur thermique. Ladite roue dentée à l'extrémité du vilebrequin peut également être un arbre d'équilibrage qui est ensuite apte à entrainer en rotation des accessoires qui présentent chacun un axe de rotation avec un élément d'entrainement.

Les accessoires peuvent être passifs c'est-à-dire entrainés seulement par la rotation du vilebrequin du moteur afin d'accomplir une fonction particulière ; ils sont par exemple un compresseur, une pompe à eau.

Les accessoires peuvent également avoir un rôle moteur et de ce fait entrainer en retour le vilebrequin du moteur ; ils sont par exemple un alterno-démarreur qui peut fonctionner à l'état entrainé pour charger une batterie du moteur et à l'état moteur en tant que démarreur pour entrainer le moteur thermique notamment lors du démarrage dudit moteur.

Un moteur thermique peut être alimenté par un carburant qui génère peu d'enthalpie ou en tout cas pas assez notamment à faible régime, un exemple est un carburant à base d'hydrogène H2. Ce manque d'enthalpie provoque :
- Des problèmes de remplissage en air à faible régime
- Des problèmes pour faire les transitoires sans débouclage pour passer d'un mode de fonctionnement (régime x charge) à un autre.

Il est connu d'ajouter des systèmes pour vaincre ces difficultés par exemple un très petit turbocompresseur mais qui n'est utilisé que sur une très petite portion du champ de fonctionnement (régime x charge) du moteur, ou un compresseur mécanique.

On peut associer ledit moteur avec un compresseur d'air électrique pour suppléer ou remplacer le turbocompresseur en place mais cela augmente sensiblement le coût de l'ensemble moteur et nécessite une charge plus fréquente d'une batterie électrique entrainant une augmentation de consommation du moteur.

On a alors un besoin d'un compresseur d'air pour pallier les insuffisances d'alimentation en air du moteur, ledit compresseur étant entrainé en rotation par l'ensemble moteur comprenant moteur et un alterno-démarreur, selon les différents régimes du moteur.

Le document WO 2014/042891 A1 divulgue un actionneur d'un moteur thermique d'un type connu.

La publication EP1070837-A1 propose un moteur électrique et une soufflante pour alimenter en air l'admission d'un moteur thermique. Cette configuration nécessite un moteur électrique ainsi qu'une soufflante augmentant le coût et la consommation du moteur.

On connait des dispositifs de couplage d'accessoire avec l'axe de rotation d'un vilebrequin de moteur thermique qui comprennent un alterno-démarreur apte à assurer le couplage de l'axe de l'accessoire avec l'axe de rotation du vilebrequin ainsi que le verrouillage en rotation des deux axes.

Le document DE102009045624-A1 divulgue un embrayage entre un générateur et un compresseur d'air suppléant le besoin en air d'un moteur thermique associé à un turbocompresseur. L'embrayage est assez complexe et le coût ainsi que la consommation du moteur peuvent augmenter de manière sensible.

Le document FR3 023 222 -A1 propose par exemple une face accessoires de moteur thermique comportant un compresseur d'air, un alterno-démarreur, une poulie montée sur un arbre de vilebrequin d'un moteur thermique et munie d'un dispositif d'accouplement, et une courroie de transmission entourant ledit compresseur, ledit alterno-démarreur, et ladite poulie accessoire de vilebrequin, avec une unité de contrôle configurée pour piloter ledit alterno-démarreur en mode moteur pour synchroniser les vitesses de rotation de ladite poulie et de l'arbre de vilebrequin avant de commander un verrouillage dudit dispositif d'accouplement pour assurer un accouplement entre ladite poulie et ledit arbre de vilebrequin.

Selon cette configuration, les trois éléments qui sont la poulie de vilebrequin, l'alterno-démarreur et le compresseur d'air sont en permanence reliés ensemble et ne permet pas un fonctionnement du compresseur découplé du moteur thermique. En effet, le vilebrequin ainsi que tous les éléments connectés en rotation audit vilebrequin génèrent une surcharge trop importante pour autoriser un entrainement dudit compresseur par l'alterno-démarreur en mode moteur.

On peut également disposer un dispositif d'accouplement/désaccouplement de la roue d'entrainement de l'axe du vilebrequin, disposé à l'extrémité du vilebrequin, mais cette configuration ne permet pas un mode de fonctionnement avec le moteur et l'alternateur en service seuls sans le compresseur d'air, c'est-à-dire avec l'arrêt dudit compresseur.

Un autre problème est un embrayage en rotation avec un axe tournant pour entrainer en rotation un autre axe depuis son arrêt ou non fonctionnement jusqu'à une vitesse nominale de rotation ; l'axe tournant étant dans notre cas l'axe de l'alterno-démarreur et l'axe arrêté étant celui du compresseur d'air.

Le but de l'invention est de remédier à ces problèmes et un des objets de l'invention est un dispositif agencé sur une face accessoires d'un moteur thermique, et apte à accoupler/désaccoupler trois éléments de moteur dont un alterno-démarreur d'avec un compresseur d'air et un axe de rotation solidaire en rotation avec un vilebrequin de moteur thermique. L'objectif est de réaliser les fonctions de démarreur, alternateur, d'augmentation de puissance ou « boost » électrique en anglais, e-compresseur en mutualisant des organes existants et en les combinant astucieusement par un système mécanique.

### Présentation de l'invention

La présente invention concerne un actionneur suivant toutes les caractéristiques de la revendication 1.

De manière avantageuse, l'actionneur est apte à contrôler l'accouplement/désaccouplement en rotation de trois éléments du moteur dont deux peuvent être moteur et le troisième entrainé et comprend une bague de couplage ou baladeur apte à coopérer avec un moyen de couplage/découplage rapide de la bague avec le compresseur pour entrainer en rotation ou le libérer.

Selon l'invention :
- la bague de couplage est mobile en coulissement selon son axe.

Selon l'invention, la bague est mobile en coulissement selon son axe et vient selon différentes positions de coulissement commander/contrôler les accouplements/désaccouplements entre les trois éléments du moteur.

Selon d'autres caractéristiques avantageuses de l'invention :
- le moyen de couplage comprend une couronne élastique de transfert.

De manière avantageuse, le moyen de couplage comprend une couronne élastique qui permet de maintenir le couplage du compresseur avec l'alterno-démarreur sur une course de longueur définie.
- la couronne élastique est soumise à une force de contraintes préchargée.

De manière avantageuse, la couronne élastique est soumise à une force de contraintes préchargée pour permettre un accouplement rapide entre l'alterno-démarreur et le compresseur.
- la couronne élastique comprend des moyens élastiques parsemés sur un anneau et aptes à former une force de rappel parallèle à l'axe de la couronne.

De manière avantageuse, la couronne élastique comprend des moyens élastiques répartis uniformément sur un anneau et apte à former une force de rappel parallèle à l'axe de la couronne afin de répartir la force d'appui sur toute la couronne.
- la couronne élastique autorise un coulissement vers le compresseur d'air.

De manière avantageuse, la couronne élastique autorise un coulissement vers le compresseur et coopère avec la bague de couplage qui vient appuyer sur ladite couronne élastique lors de son coulissement suivant deux positions d'embrayage du compresseur avec l'alterno-démarreur.
- La couronne élastique présente une paroi annulaire radiale destinée au contact avec la bague de couplage tubulaire.

De manière avantageuse, la couronne élastique présente une paroi annulaire destinée à recevoir en appui la bague de couplage qui coulisse vers le compresseur et commande donc l'embrayage du compresseur avec l'alterno-démarreur.
- la couronne élastique est apte à commander le déclenchement de l'embrayage et la solidarisation en rotation de l'axe de rotation de l'alterno-démarreur avec l'axe de rotation du compresseur d'air à partir d'une première position d'enfoncement de la paroi radiale annulaire de ladite couronne.

De manière avantageuse, le coulissement de la bague de couplage vers le compresseur avec appui sur la paroi annulaire arrive à une première position d'enfoncement qui commande l'embrayage du compresseur avec l'alterno-démarreur. La commande d'embrayage est simple par l'atteinte d'une position de coulissement de la bague de couplage.
- la couronne élastique est apte à assurer le contrôle du maintien de l'embrayage et la solidarisation en rotation de l'axe de rotation de l'alterno-démarreur avec l'axe de rotation du compresseur d'air avec un enfoncement de la paroi annulaire radiale sur une course axiale depuis la première position d'enfoncement jusqu'à une seconde position d'enfoncement extrême de ladite couronne.

De manière avantageuse, la couronne élastique permet un enfoncement jusqu'à une deuxième position d'enfoncement vers le compresseur avec toujours le compresseur embrayé avec l'alterno-démarreur. Elle permet donc le maintien dudit embrayage avec un enfoncement de la couronne élastique sur une course entre les deux positions d'enfoncement.
- la couronne élastique est installée sur un dispositif d'embrayage comprenant des anneaux coniques.

De manière avantageuse, la couronne élastique est installée sur un dispositif d'embrayage comprenant des anneaux coniques et transfère rapidement les commandes d'embrayage.
- les roues d'entrainement des trois éléments sont coaxiales.

De manière avantageuse, les roues d'entrainement des trois éléments qui sont l'alterno-démarreur, le compresseur d'air et le vilebrequin sont coaxiales pour minimiser l'encombrement du dispositif.
- le dispositif comprend une bague tubulaire de liaison mobile en coulissement selon son axe entre trois positions correspondant aux couplages possibles en rotations des trois éléments.

De manière avantageuse, le dispositif comprend une bague tubulaire de liaison mobile en coulissement sur trois positions pour engager/désengager les liaisons entre les roues d'entrainement des trois éléments qui sont un alterno-démarreur, un compresseur d'air et un vilebrequin. Les positions de coulissement de la rondelle tubulaire permettent d'obtenir les n-uplets de couplage suivants : (alterno-démarreur + vilebrequin), (alterno-démarreur + compresseur), (alterno-démarreur + vilebrequin + compresseur). Le coulissement de la bague tubulaire est assuré par un moteur électrique commandé par l'unité de contrôle et de commandes.
- la roue d'entrainement de l'alterno-démarreur est agencée entre les roues d'entrainement du vilebrequin et du compresseur d'air.

Suivant l'invention, la roue d'entrainement de l'alterno-démarreur est installée entre les roues d'entrainement du vilebrequin et du compresseur pour permettre les deux fonctions de l'alterno-démarreur qui sont l'entrainement du compresseur et le couplage avec le vilebrequin.
- la roue d'entrainement du vilebrequin entoure l'arbre de rotation de l'alterno-démarreur.

De manière avantageuse, la roue d'entrainement du vilebrequin entoure l'arbre de rotation de l'alterno-démarreur en gardant une liberté en rotation.
- la roue d'entrainement du vilebrequin présente une surface périphérique d'entrainement dans le prolongement axial de la surface périphérique d'entrainement de la roue d'entrainement de l'alterno-démarreur.
- De manière avantageuse, la roue d'entrainement du vilebrequin présente une surface périphérique d'entrainement dans le prolongement axial de la surface périphérique d'entrainement de la roue d'entrainement de l'alterno-démarreur pour permettre un accouplement simple en rotation.
- La bague tubulaire présente une paroi intérieure cylindrique complémentaire aux surfaces périphériques d'entrainement des roues d'entrainement de l'alterno-démarreur et du vilebrequin. De manière avantageuse, la bague de couplage tubulaire présente une paroi intérieure cylindrique complémentaire aux surfaces périphériques d'entrainement des roues d'entrainement de l'alterno-démarreur et du vilebrequin et permet une coopération entre lesdits éléments.
- La bague de couplage tubulaire est conformée pour entourer les deux roues d'entrainement du vilebrequin et de l'alterno-démarreur.

De manière avantageuse, la bague de couplage tubulaire est conformée pour entourer les deux roues d'entrainement du vilebrequin et de l'alterno-démarreur, notamment pour égrener les roues d'entrainement du vilebrequin et de l'alterno-démarreur.
- la bague de couplage tubulaire comprend une paroi d'appui annulaire destinée de venir en appui contre la paroi annulaire radiale de la couronne élastique.

De manière avantageuse, la bague de couplage tubulaire comprend une paroi d'appui annulaire destinée de venir en appui contre la paroi annulaire radiale de la couronne élastique pour permettre un appui optimal contre la couronne élastique lors du coulissement de commande.
- l'arbre de rotation de l'alterno-démarreur est coaxial avec l'arbre du compresseur d'air et les deux arbres coopèrent pour le maintien rectiligne de l'axe de rotation.

De manière avantageuse, l'arbre de rotation de l'alterno-démarreur est coaxial avec l'arbre du compresseur d'air et les deux arbres coopèrent pour le maintien rectiligne de l'axe de rotation en gardant une liberté de rotation de l'un par rapport à l'autre. En effet, l'arbre de rotation de l'alterno-démarreur peut tourner sans entrainer l'arbre d'entrainement du compresseur.
- la bague de couplage tubulaire est déplacée en coulissement par une fourchette de commande.

De manière avantageuse, la bague de couplage tubulaire est déplacée en coulissement par une fourchette de commande actionnée par un moteur contrôlée par une unité de commande.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'un dispositif d'accouplement de roues d'entrainement d'un alterno-démarreur avec un vilebrequin et un compresseur d'air d'un moteur à combustion interne selon un mode de fonctionnement sans accouplement du compresseur.
[Fig. 2] est une vue schématique de face de l'actionneur selon l'invention.
[Fig. 3] est une vue de coupe longitudinale de l'actionneur.
[Fig. 4] est une vue de coupe longitudinale d'une partie de l'actionneur avec un mode de fonctionnement.
[Fig. 5] est une vue de coupe longitudinale d'une partie de l'actionneur avec un deuxième mode de fonctionnement.
[Fig. 6] est une vue de coupe longitudinale d'une partie de l'actionneur avec un troisième mode de fonctionnement.

### Description détaillée des figures

Dans la description qui va suivre, des chiffres de référence identiques désignent des pièces identiques ou ayant des fonctions similaires.

Un moteur thermique peut comprendre un turbocompresseur qui comprend un étage de compression pour comprimer de l'air d'admission couplé avec un étage de turbine apte à recueillir de l'énergie des gaz brulés à l'échappement. Ledit étage de turbine est apte à faire tourner un arbre qui relie la turbine à l'étage de compression.

Il est connu de disposer de moteur thermique associé avec un turbo-compresseur de faible puissance et auquel on associe un compresseur d'air supplémentaire apte à seconder par exemple le turbocompresseur du véhicule dans certains cas, notamment à bas régime et pendant les augmentations transitoires de charge. Ledit compresseur d'air est apte à alimenter en air le moteur thermique dépendamment ou indépendamment du vilebrequin et donc du régime dudit moteur. Le compresseur d'air peut comprendre un arbre d'entrainement pour être entrainé en rotation notamment pour une suralimentation d'air selon un mode transitoire.

Il est aussi connu de suppléer le moteur thermique avec un moteur d'origine électrique pour par exemple les phases de démarrage. Le moteur électrique peut être un alterno-démarreur qui possède un premier rôle en tant qu'alternateur pour recharger une batterie électrique pour le fonctionnement du moteur et un second rôle en tant que moteur pour augmenter la puissance de l'ensemble moteur thermique avec alterno-démarreur lors des phases de démarrage.

Le compresseur d'air, l'alterno-démarreur et le vilebrequin peuvent être couplés en rotation mais les différents modes de fonctionnement du moteur ne nécessitent pas d'avoir en permanence le couplage du vilebrequin avec l'alterno-démarreur et avec le compresseur d'air qui est susceptible d'augmenter la consommation du moteur.

Pour faciliter la compréhension, dans la suite de la description, le compresseur d'air est apte à alimenter en air le moteur thermique dépendamment ou indépendamment du vilebrequin et donc du régime du moteur.

La présente invention concerne un actionneur de couplage pour un moteur thermique de véhicule automobile, d'un alterno-démarreur qui présente un axe de rotation et une roue d'entrainement solidaires en rotation, un compresseur d'air qui comprend un axe d'entrainement et une roue d'entrainement solidaires en rotation, une roue d'entrainement fixée solidaire à l'extrémité d'un axe solidaire en rotation d'un vilebrequin, lesdits axes étant parallèles entre eux.

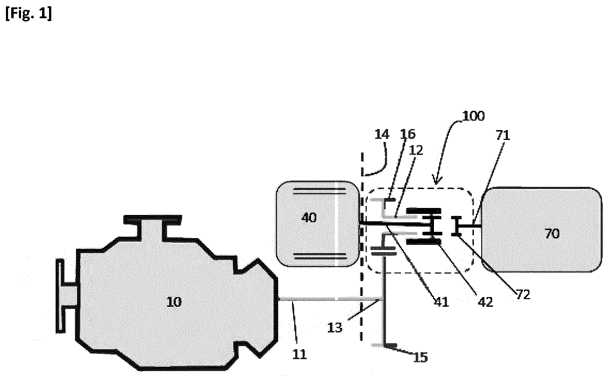

Selon la figure 1, un moteur thermique 10 comprend un vilebrequin 11 qui présente un arbre 12 dont une extrémité 13 débouche de la face accessoires 14 du moteur. Une roue menante 15 est fixée solidaire en rotation dudit arbre 12 de vilebrequin. La roue menante 15 engrène une roue d'entrainement 16 associée au vilebrequin dans un actionneur 100 de couplage ou de liaison en rotation.

Pour faciliter la compréhension, la roue d'entrainement 16 associée au vilebrequin sera nommée roue d'entrainement 16 du vilebrequin.

On peut également avoir un ensemble d'engrènement de roues ou poulies depuis l'arbre 12 du vilebrequin 11.

Un alterno-démarreur 40 est fixé contre le moteur thermique 10 et présente un arbre ou axe 41 de rotation parallèle à l'arbre 12 du vilebrequin, qui débouche de la face accessoires 14.

L'arbre de rotation ou d'entrainement dudit alterno-démarreur est enfoncé dans un actionneur de couplage qui comprend un carter 100c formé de manière préférentielle par deux demi-coquilles assemblées 101,102 l'une à l'autre et délimitant une chambre.

L'extrémité libre 43 de cet axe de rotation est logée dans ladite chambre 103 et porte une roue d'entrainement 42 solidaire dudit axe.

Un compresseur d'air 70 est également fixé contre le moteur thermique et présente un arbre de rotation 71 à l'extrémité libre duquel est fixée solidaire une roue d'entrainement 72.

Dans la description qui suit, à titre d'exemple, le compresseur d'air 70 est fixé en vis-à-vis de l'alterno-démarreur, c'est-à-dire que les arbres de rotation des deux éléments sont dans le prolongement axial l'un de l'autre ou que les roues d'entrainement sont voisines ou juxtaposées. Toutefois, le compresseur d'air peut également être fixé contre le moteur thermique 10, à côté de l'alterno-démarreur 40 du même côté de la face accessoires et présenter son arbre de rotation débouchant de ladite face accessoires 14 du moteur. Un système de renvoi avec une roue de transfert intermédiaire (non représentée) disposée en vis-à-vis de la roue d'entrainement 42 de l'alterno-démarreur 40 pourra être agencé.

Dans la suite de la description, les roues d'entrainement du vilebrequin 16 ou du compresseur 72 peuvent être des roues intermédiaires engrenée respectivement par le vilebrequin 11 et entrainant le compresseur d'air 70.

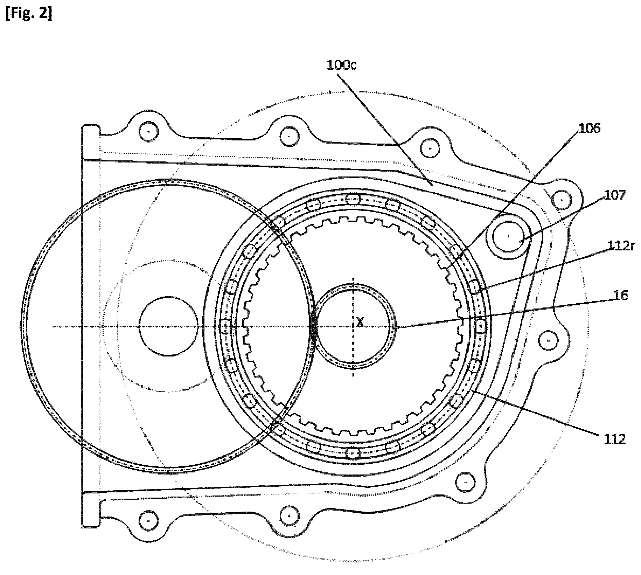

Selon la figure 2, les roues d'entrainement du vilebrequin 16, de l'alterno-démarreur 43 et du compresseur d'air 72 sont coaxiales selon l'axe longitudinal X et logées dans la chambre 103 du carter 100c de l'actionneur 100 composé de deux demi-coquilles 101,102 assemblées l'une contre l'autre. Le carter de l'actionneur de couplage est fixé par exemple sur un côté du moteur thermique.

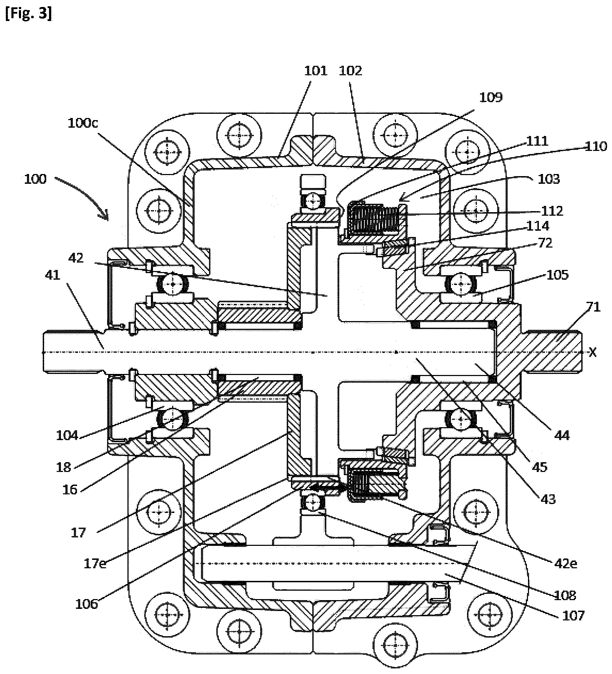

Selon la figure 3, l'arbre de rotation 41 de l'alterno-démarreur débouche dans ladite chambre 103 et est tenu par un palier de roulement 104 qui est fixé en périphérie radiale à la paroi du carter de l'actionneur.

L'extrémité libre 43 dudit arbre de rotation 41 est enfoncée dans un alésage axial creusé dans l'arbre de rotation ou d'entrainement 71 du compresseur d'air. Ladite extrémité libre 43 est tenue par un palier 45 formé par un roulement aiguilles selon le mode de réalisation présenté.

L'arbre d'entrainement du compresseur 71 est tenu par un palier à roulement 105 fixé en périphérie radiale à la paroi du carter 100c.

Ainsi l'arbre de rotation 41 de l'alterno-démarreur et d'entrainement 71 du compresseur sont coaxiaux et solidaires axialement et transversalement tout en gardant une liberté de rotation de l'un par rapport à l'autre. Les deux arbres coopèrent ensemble pour assurer un axe de rotation confondu avec l'axe longitudinal X rectiligne dans le carter 100c.

L'arbre de rotation 41 de l'alterno-démarreur 40 porte :
- la roue d'entrainement 16 du vilebrequin,
- la roue d'entrainement 42 de l'alterno-démarreur.

Plus précisément, la roue d'entrainement 16 du vilebrequin entoure l'arbre de rotation 41 de l'alterno-démarreur, séparée dudit arbre par un palier de roulement aiguilles 18. Ainsi la roue d'entrainement du vilebrequin 16 est libre en rotation par rapport à l'arbre de rotation 41 de l'alterno-démarreur tout en étant liée axialement audit arbre.

Selon un mode réalisation présenté en figure 3, la roue d'entrainement 16 du vilebrequin est prolongée radialement par un crabot 17 ou roue dentée. Le crabot est fixé solidaire de ladite roue d'entrainement par exemple par soudure. Il peut être aussi partie d'une pièce avec ladite roue d'entrainement du vilebrequin. Par la suite, pour faciliter la compréhension, ledit crabot 17 est partie de la roue d'entrainement 16 du vilebrequin. La rotation du crabot équivaut à la rotation de la roue d'entrainement du vilebrequin.

De manière préférentielle, le crabot 17 est voisin de la roue d'entrainement 42 de l'alterno-démarreur et présente une surface périphérique d'entrainement 17e dans le prolongement axial de la surface périphérique d'entrainement 42e de la roue d'entrainement 42 de l'alterno-démarreur. De façon plus claire, les surfaces périphériques radiales 17e,42e du crabot et de la roue d'entrainement de l'alterno-démarreur présentent un rayon de même dimension et sont adjacentes.

Une bague tubulaire dénommée baladeur 106 est conformée pour entourer les surfaces périphériques 17e,42e du crabot et de la roue d'entrainement de l'alterno-démarreur. La bague tubulaire est apte à coulisser axialement au-dessus des surfaces périphériques d'entrainement des deux roues. Aux jeux de fonctionnement près, la bague tubulaire présente une paroi intérieure cylindrique sensiblement complémentaire aux surfaces périphériques d'entrainement des roues d'entrainement de l'alterno-démarreur 40 et du crabot et donc du vilebrequin 11.

De manière préférentielle, les surfaces périphériques des roues d'entrainement portent chacune une denture de dimensions identiques et la bague tubulaire présente une paroi intérieure cylindrique portant une denture adaptée à s'engager dans l'une et/ou l'autre des dentures des surfaces périphériques des roues d'entrainement.

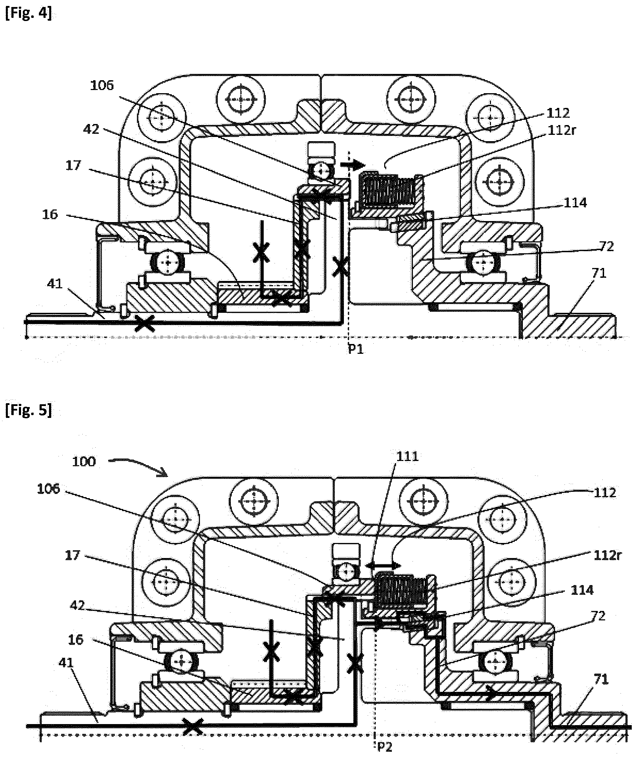

Le baladeur 106 permet de rendre solidaires en rotation les deux roues d'entrainement du vilebrequin et de l'alterno-démarreur ou de les rendre indépendantes l'une de l'autre en rotation, par un simple coulissement axial selon l'axe X comme représenté sur la figure 4. En effet La longueur axiale du baladeur est choisie pour avoir ladite bague entourant les deux surfaces périphériques des deux roues d'entrainement ou entourant uniquement la roue d'entrainement de l'alterno-démarreur selon la position de coulissement du baladeur.

La connexion des roues d'entrainement de l'alterno-démarreur et du vilebrequin via le crabot et leur liaison en rotation peut être faite de manière connue par un procédé selon lequel on pilote l'alterno-démarreur pour porter la vitesse de sa roue d'entrainement proche de celle du vilebrequin du moteur thermique avec un écart minime de l'ordre de 30tr/min, et on trouve alors le passage pour engager le baladeur sur le crabot ou la roue d'entrainement du vilebrequin.

Selon un mode de réalisation le baladeur 106 est déplacé en coulissement par une fourchette 107 qui s'étend parallèlement à l'axe X. Ladite fourchette est connectée au baladeur par l'intermédiaire d'un roulement 108 qui permet la liberté en rotation du baladeur.

Le baladeur présente une paroi d'appui annulaire 109 qui s'étend radialement et est tournée vers le compresseur d'air 70.

L'actionneur 100 comprend un moyen 110 de couplage/découplage rapide du compresseur d'air 70 de de l'alterno-démarreur via la roue d'entrainement 42. Ledit moyen est activé par appui sur une paroi de commande radiale 111. Ladite paroi de commande radiale est agencée en vis-à-vis de la paroi d'appui annulaire 109 du baladeur 106.

Le moyen de couplage 110 comprend une couronne élastique de transfert 112 qui coopère avec un dispositif d'embrayage conique 114.

La couronne élastique comprend une multitude de moyens élastiques 112r, par exemple des ressorts hélicoïdaux d'axes parallèle à l'axe X longitudinal et répartis uniformément sur la surface annulaire de la couronne 112.

La couronne élastique est montée sur le dispositif d'embrayage conique 114 formés d'anneaux coniques, notamment un anneau supérieur, un anneau intermédiaire et un anneau inférieur monté sur l'arbre d'entrainement du compresseur, avec un frottement entre lesdits anneaux.

Les moyens élastiques et donc la couronne élastique de transfert, sont soumis à une contrainte initiale de précharge.

La couronne élastique 112 avec les ressorts hélicoïdaux 112r et les anneaux coniques du dispositif d'embrayage conique 114, avec les frottements entre lesdits anneaux sont choisis pour obtenir des valeurs de couples développés sur l'arbre d'entrainement 71 du compresseur sensiblement constantes ou dans une plage de valeurs de couples sensiblement réduite autour d'une valeur moyenne. Ainsi un enfoncement entre deux positions de la couronne élastique 112 de transfert entraine des valeurs de couple sensiblement égales.

La couronne élastique 112 est apte à autoriser un enfoncement de la paroi radiale 111 sur une course limitée selon l'axe longitudinal X.

Ledit enfoncement comprend deux positions d'enfoncement significatives pour le fonctionnement de l'actionneur :
- une première position P2 d'enfoncement vers la roue d'entrainement du compresseur d'air à partir de laquelle le dispositif d'embrayage 114 est en mode embrayé, plus précisément, la roue d'entrainement 72 du compresseur d'air est liée en rotation avec la roue d'entrainement 42 de l'alterno-démarreur ainsi qu'avec le crabot 17 et la roue d'entrainement du vilebrequin ;
- une seconde position P3 d'enfoncement vers la roue d'embrayage 72 du compresseur d'air à partir de laquelle le dispositif d'embrayage 114 est en mode embrayé avec la roue d'entrainement 72 du compresseur d'air liée en rotation uniquement avec la roue d'entrainement 42 de l'alterno-démarreur. La seconde position P3 peut être la limite d'enfoncement.

En coulissement dans le sens opposé vers l'alterno-démarreur, le baladeur peur être déplacé jusqu'à la position P1 où le baladeur connecte la roue d'entrainement 72 de l'alterno-démarreur avec le crabot et la roue d'entrainement du vilebrequin, ceci est représenté en figure 4.

Le fonctionnement du couplage/découplage du compresseur est décrit ci-après.

Le coulissement du baladeur vers le compresseur d'air amène la paroi d'appui du baladeur au contact contre la paroi de commande radiale du moyen de couplage/decouplage du compresseur. Aucune action d'embrayage n'est encore commandée. A l'atteinte de la première position d'enfoncement P2 de la paroi de commande radiale, le moyen de couplage est déclenché et un couple est formé sur l'anneau inférieur notamment pour entrainer l'arbre d'entrainement du compresseur comme représenté sur la figure 5.

La couronne élastique 112 est apte à commander le déclenchement de l'embrayage et la solidarisation en rotation de l'arbre de rotation 41 de l'alterno-démarreur 40 avec l'arbre de rotation 71 du compresseur d'air 70 à partir d'une première position d'enfoncement P2 de la paroi radiale annulaire de ladite couronne.

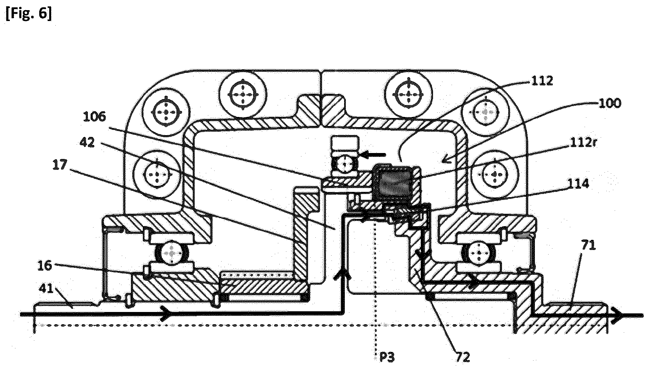

Le coulissement du baladeur 106 peut se poursuivre jusqu'à l'atteinte de la position extrême P3 avec une conservation d'un couple sur l'arbre d'entrainement 71 du compresseur sensiblement de même valeur qu'à la première position d'enfoncement précédente P2. L'arbre du compresseur 71 est donc toujours solidaire en rotation avec le baladeur 106, qui est solidaire en rotation de façon permanente avec la roue 42 et l'arbre d'entrainement 41 de l'alterno-démarreur. Comme représenté sur la figure 6, à ladite position extrême P3, le baladeur n'entoure plus le crabot, l'alterno-démarreur 40 peut alors entrainer seul le compresseur d'air 70.

La couronne élastique 112 est donc apte à assurer le contrôle du maintien de l'embrayage et la solidarisation en rotation de l'arbre de rotation 41 de l'alterno-démarreur avec l'arbre de rotation 71 du compresseur d'air avec un enfoncement de la paroi annulaire radiale sur une course axiale depuis la première position d'enfoncement P2 jusqu'à une seconde position d'enfoncement extrême P3 de la paroi de commande 111 de ladite couronne élastique.

Selon un exemple de réalisation, le nombre de ressorts hélicoïdaux 112r répartis est de 24 sur la surface annulaire de la couronne élastique 112 dont le rayon intérieur est de 40mm. Chacun des moyens ou ressorts hélicoïdaux est préchargé par une contrainte initiale de l'ordre de 20 N, de préférence 17N.

La couronne élastique de transfert est montée sur un dispositif d'embrayage conique formé par exemple par trois anneaux coniques frottant entre eux avec un coefficient de frottement de l'ordre de 0,1. L'angle des cônes est inférieur à10° de préférence de l'ordre de 7°par rapport à l'axe X longitudinal.

Un tel dispositif d'embrayage peut être développé pour une boite de vitesses de véhicule automobile.

### L'objectif est atteint :

L'actionneur de couplage selon l'invention permet trois modes de fonctionnement du moteur correspondant à trois positions d'accouplement entre les trois éléments du moteur qui sont le vilebrequin, l'alterno-démarreur et le compresseur d'air. Il permet de lier en rotation deux éléments du moteur qui peuvent fonctionner en mode moteur indépendamment l'un de l'autre, et de lier en rotation également un élément fonctionnant en mode moteur avec un élément entrainé. Il permet de réaliser les fonctions de démarreur, d'alternateur, d'augmentation de puissance électrique, de compresseur d'air en mutualisant des organes existants et en les combinant astucieusement.

Comme il va de soi, l'invention ne se limite pas aux seules formes d'exécution de cette prise, décrites ci-dessus à titre d'exemples, elle en embrasse au contraire toutes les variantes entrant dans le cadre défini par les revendications, par exemple le crabot 17 est d'une pièce avec la roue d'entrainement 16 du vilebrequin.

Les arbres d'entrainement 41, 71 peuvent comprendre des cannelures pour entrainer les arbres de rotation de l'alterno-démarreur ou du compresseur d'air.

Le compresseur d'air 70 peut être un élément de fonctionnement du moteur qui nécessite d'être entrainé en rotation pour son fonctionnement, par exemple une pompe.

## Revendications

1. Actionneur (100) d'un moteur thermique apte à contrôler l'accouplement/désaccouplement en rotation de trois éléments dudit moteur, à savoir un alterno-démarreur (40) qui présente un axe de rotation (41) et une roue d'entrainement (42) solidaire en rotation avec ledit axe de l'alterno-démarreur, d'avec un compresseur d'air (70) qui présente un axe d'entrainement (71) et une roue d'entrainement (72) solidaire en rotation avec ledit axe dudit compresseur, et d'avec une roue d'entrainement (16) solidaire en rotation d'un vilebrequin (11), lesdits axes étant parallèles entre eux,
**caractérisé en ce que** ledit actionneur (100) comprend une bague de couplage de révolution (106) solidaire en rotation avec l'alterno-démarreur, mobile en coulissement selon son axe et apte à coopérer avec un moyen de couplage (110) rapide de ladite bague avec le compresseur d'air afin d'entrainer en rotation rapidement le compresseur d'air, et **en ce que** la roue d'entrainement (42) de l'alterno-démarreur est agencée entre les roues d'entrainement (16,72) du vilebrequin et du compresseur d'air.

2. Actionneur (100) selon la revendication 1, **caractérisé en ce que** la roue d'entrainement du vilebrequin entoure l'arbre de rotation de l'alterno-démarreur.

3. Actionneur (100) selon la revendication 1 ou 2, **caractérisé en ce que** la roue d'entrainement du vilebrequin présente une surface périphérique d'entrainement dans le prolongement axial d'une surface périphérique d'entrainement de la roue d'entrainement de l'alterno-démarreur.

4. Actionneur (100) selon la revendication 3, **caractérisé en ce que** la bague tubulaire présente une paroi intérieure cylindrique complémentaire aux surfaces périphériques d'entrainement des roues d'entrainement de l'alterno-démarreur et du vilebrequin.

5. Actionneur (100) selon l'une quelconque des revendications 1 à 4, **caractérisé en ce que** la bague de couplage de révolution (106) est conformée pour entourer les deux roues d'entrainement (16,42) du vilebrequin et de l'alterno-démarreur.

6. Actionneur (100) selon l'une quelconque des revendications 1 à 5, **caractérisé en ce que** la bague de couplage de révolution (106) comprend une paroi d'appui annulaire (109) destinée de venir en appui contre la paroi annulaire radiale (111) de la couronne élastique (112).

7. Actionneur (100) selon l'une quelconque des revendications 1 à 6, **caractérisé en ce que** l'arbre de rotation (41) de l'alterno-démarreur est coaxial avec l'arbre d'entrainement (71) du compresseur d'air et les deux arbres coopèrent pour le maintien rectiligne de l'axe de rotation. 17

8. Actionneur (100) selon l'une quelconque des revendications 1 à 7, **caractérisé en ce que** la bague de couplage de révolution (106) est déplacée en coulissement par une fourchette de commande (107).

9. Actionneur (100) selon l'une quelconque des revendications 1-8, **caractérisé en ce que** le moyen de couplage (110) comprend une couronne élastique de transfert.

10. Actionneur (100) selon la revendication 9, **caractérisé en ce que** la couronne élastique (112) est soumise à une force de contraintes préchargée.

11. Actionneur (100) selon la revendication 9 ou 10, **caractérisé en ce que** la couronne élastique (112) comprend des moyens élastiques (112r) répartis uniformément sur un anneau et aptes à former une force de rappel parallèle à l'axe (X) de la couronne.

12. Actionneur (100) selon l'une quelconque des revendications 9 à **11, caractérisé en ce que** la couronne élastique (112) autorise un coulissement vers le compresseur d'air (70).

13. Actionneur (100) selon l'une quelconque des revendications 9 à 12, **caractérisé en ce que** la couronne élastique (112) présente une paroi annulaire radiale (111) destinée au contact avec la bague de couplage de révolution (106).

14. Actionneur (100) selon l'une quelconque des revendications 9 à 13, **caractérisé en ce que** la couronne élastique (112) est apte à commander le déclenchement de l'embrayage et la solidarisation en rotation de l'axe de rotation de l'alterno-démarreur (41) avec l'axe de rotation du compresseur d'air (71) à partir d'une première position d'enfoncement (P2) de la paroi radiale annulaire (111) de ladite couronne.

15. Actionneur (100) selon l'une quelconque des revendications 9 à 14, **caractérisé en ce que** la couronne élastique (112) est apte à assurer le contrôle du maintien de l'embrayage et la solidarisation en rotation de l'axe de rotation de l'alterno-démarreur (41) avec l'axe de rotation du compresseur d'air (71) avec un enfoncement de la paroi annulaire radiale sur une course axiale depuis la première position d'enfoncement (P2) jusqu'à une seconde position d'enfoncement extrême (P3) de ladite couronne (112).

16. Actionneur (100) selon l'une quelconque des revendications 9 à 15, **caractérisé en ce que** la couronne élastique (112) est installée sur un dispositif d'embrayage (114) comprenant des anneaux coniques.

## Patentansprüche

1. Stellglied (100) eines Verbrennungsmotors, das geeignet ist, die drehfeste Kupplung / Entkupplung von drei Elementen des Motors zu steuern, nämlich eines Starter-Generators (40), der eine Drehachse (41) und ein Antriebsrad (42) aufweist, die drehfest mit der Achse des Starter-Generators verbunden sind, eines Luftverdichters (70), der eine Antriebsachse (71) und ein Antriebsrad (72) aufweist, die drehfest mit der Achse des Kompressors verbunden sind, und eines Antriebsrades (16), das drehfest mit einer Kurbelwelle (11) verbunden ist, wobei die Achsen parallel zueinander sind,
**dadurch gekennzeichnet,**
**dass** das Stellglied (100) einen Drehkupplungsring (106) umfasst, der drehfest mit dem Starter-Generator verbunden ist, entlang seiner Achse verschiebbar ist und mit einem Schnellkupplungsmittel (110) des Rings mit dem Luftverdichter zusammenwirken kann, um den Luftverdichter schnell in Drehung zu versetzen, und dass das Antriebsrad (42) des Starter-Generators zwischen den Antriebsrädern (16, 72) der Kurbelwelle und des Luftverdichters angeordnet ist.

2. Stellglied (100) nach Anspruch 1, **dadurch gekennzeichnet, dass** das Kurbelwellen-Antriebsrad die Drehwelle des Starter-Generators umgibt.

3. Stellglied (100) nach Anspruch 1 oder 2, **dadurch gekennzeichnet, dass** das Antriebsrad der Kurbelwelle eine periphere Antriebsfläche in axialer Verlängerung einer peripheren Antriebsfläche des Antriebsrads des Starter-Generators aufweist.

4. Stellglied (100) nach Anspruch 3, **dadurch gekennzeichnet, dass** der rohrförmige Ring eine zylindrische Innenwand aufweist, die komplementär zu den peripheren Antriebsflächen der Antriebsräder des Starter-Generators und der Kurbelwelle ist.

5. Stellglied (100) nach einem der Ansprüche 1 bis 4, **dadurch gekennzeichnet, dass** der Drehkupplungsring (106) s die beiden Antriebsräder (16, 42) der Kurbelwelle und des Starter-Generators umgebend geformt ist.

6. Stellglied (100) nach einem der Ansprüche 1 bis 5, **dadurch gekennzeichnet, dass** der Drehkupplungsring (106) eine ringförmige Stützwand (109) umfasst, die dazu bestimmt ist, in Anlage mit der radialen Ringwand (111) des elastischen Kranzes (112) zu kommen.

7. Stellglied (100) nach einem der Ansprüche 1 bis 6, **dadurch gekennzeichnet, dass** die Drehwelle (41) des Starter-Generators koaxial zur Antriebswelle (71) des Luftverdichters ist und die beiden Wellen zusammenwirken, um die Drehachse gerade zu halten. 17

8. Stellglied (100) nach einem der Ansprüche 1 bis 7, **dadurch gekennzeichnet, dass** der Drehkupplungsring (106) durch eine Schaltgabel (107) gleitend bewegt wird.

9. Stellglied (100) nach einem der Ansprüche 1-8, **dadurch gekennzeichnet, dass** das Kopplungsmittel (110) einen elastischen Übertragungskranz umfasst.

10. Stellglied (100) nach Anspruch 9, **dadurch gekennzeichnet, dass** der elastische Kranz (112) einer vorgespannten Spannkraft ausgesetzt ist.

11. Stellglied (100) nach Anspruch 9 oder 10, **dadurch gekennzeichnet, dass** der elastische Kranz (112) elastische Mittel (112r) umfasst, die gleichmäßig auf einem Ring verteilt sind und eine Rückstellkraft parallel zur Achse (X) des Kranzes bilden können.

12. Stellglied (100) nach einem der Ansprüche 9 bis 11, **dadurch gekennzeichnet, dass** der elastische Kranz (112) ein Gleiten in Richtung Luftverdichter (70) ermöglicht.

13. Stellglied (100) nach einem der Ansprüche 9 bis 12, **dadurch gekennzeichnet, dass** der elastische Kranz (112) eine radiale Ringwand (111) aufweist, die für den Kontakt mit dem Drehkupplungsring (106) vorgesehen ist.

14. Stellglied (100) nach einem der Ansprüche 9 bis 13, **dadurch gekennzeichnet, dass** der elastische Kranz (112) geeignet ist, das Auslösen der Kupplung und die Drehverbindung der Drehachse des Starter-Generators (41) mit der Drehachse des Luftverdichters (71) aus einer ersten Vertiefungsposition (P2) der radialen Ringwand (111) des Kranzes zu steuern.

15. Stellglied (100) nach einem der Ansprüche 9 bis 14, **dadurch gekennzeichnet, dass** der elastische Kranz (112) geeignet ist, die Steuerung des Haltens der Kupplung und die Drehverbindung der Drehachse des Starter-Generators (41) mit der Drehachse des Luftverdichters (71) bei einer Vertiefung der radialen Ringwand auf einem axialen Hub von der ersten Vertiefungsposition (P2) zu einer zweiten äußersten Vertiefungsposition (P3) des Kranzes (112) sicherzustellen.

16. Stellglied (100) nach einem der Ansprüche 9 bis 15, **dadurch gekennzeichnet, dass** der elastische Kranz (112) an einer Kupplungsvorrichtung (114) installiert ist, die konische Ringe umfasst.

## Claims

1. Actuator (100) of a heat engine capable of controlling the rotational coupling/decoupling of three elements of the engine, namely an alternator-starter (40) which has a rotational (41) axis and a drive (42) wheel rotationally fixed to the shaft of the alternator-starter, with an air (70) compressor which has a drive (71) shaft and a drive (72) wheel rotationally fixed to the shaft of the compressor, and with a drive wheel (16) rotationally fixed to a crankshaft (11), wherein the shafts are parallel to one another,
**characterised**
**in that** the actuator (100) comprises a rotational (106) coupling ring rotationally fixed to the alternator-starter, slidable along its axis and capable of co-operating with a rapid coupling (110) means for rapidly coupling the ring to the air compressor in order to rapidly rotate the air compressor, and in that the drive (42) wheel of the alternator-starter is arranged between the drive wheels (16, 72) of the crankshaft and of the air compressor.

2. Actuator (100) according to claim 1, **characterised in that** the drive wheel of the crankshaft surrounds the rotational shaft of the alternator-starter.

3. Actuator (100) according to claim 1 or 2, **characterised in that** the drive wheel of the crankshaft has a peripheral drive surface in the axial extension of a peripheral drive surface of the drive wheel of the alternator-starter.

4. Actuator (100) according to claim 3, **characterised in that** the tubular ring has an inner cylindrical wall complementary to the peripheral drive surfaces of the drive wheels of the alternator-starter and of the crankshaft.

5. Actuator (100) according to any one of claims 1 to 4, **characterised in that** the rotational (106) coupling ring is shaped to surround the two drive wheels (16,42) of the crankshaft and of the alternator-starter.

6. Actuator (100) according to any one of claims 1 to 5, **characterised in that** the rotational (106) coupling ring comprises an annular bearing wall (109) intended to bear against the radial (111) annular wall of the elastic (112) ring.

7. Actuator (100) according to any one of claims 1 to 6, **characterised in that** the rotational (41) shaft of the alternator-starter is coaxial with the drive (71) shaft of the air compressor, and the two shafts co-operate to maintain the rectilinear alignment of the rotational 17 shaft.

8. Actuator (100) according to any one of claims 1 to 7, **characterised in that** the rotational (106) coupling ring is slid axially by a control (107) fork.

9. Actuator (100) according to any one of claims 1-8, **characterised in that** the coupling (110) means comprises an elastic transfer ring.

10. Actuator (100) according to claim 9, **characterised in that** the elastic (112) ring is subjected to a pre-load force.

11. Actuator (100) according to claim 9 or 10, **characterised in that** the elastic (112) ring comprises elastic (112r) means uniformly distributed around a ring and capable of generating a return force parallel to the axis (X) of the ring.

12. Actuator (100) according to any one of claims 9 to 11, **characterised in that** the elastic (112) ring allows sliding towards the air compressor (70).

13. Actuator (100) according to any one of claims 9 to 12, **characterised in that** the elastic (112) ring has a radial (111) annular wall intended for contact with the rotational (106) coupling ring.

14. Actuator (100) according to any one of claims 9 to 13, **characterised in that** the elastic (112) ring is capable of controlling the triggering of the clutch and the rotational coupling of the rotational shaft of the alternator-starter (41) with the rotational axis of the air (71) compressor, starting from a first depression (P2) position of the radial annular (111) wall of the ring.

15. Actuator (100) according to any one of claims 9 to 14, **characterised in that** the elastic (112) ring is capable of ensuring the control of the maintenance of the clutch and the rotational coupling of the rotational shaft of the alternator-starter (41) with the rotational axis of the air (71) compressor, with a depression of the radial annular wall along an axial stroke from the first depression (P2) position to a second extreme (P3) depression position of the ring (112).

16. Actuator (100) according to any one of claims 9 to 15, **characterised in that** the elastic (112) ring is mounted on a clutch (114) device comprising conical rings.
